# EUROPEAN PATENT APPLICATION

(11) **EP 4 718 776 A1**
(43) Date of publication of application: **01.04.2026**
(21) Application number: 24831039.3
(22) Date of filing: 28.06.2024
(51) Int. Cl.: H04L 9/40

(54) **SERVICE ACCESS CONTROL METHOD, ELECTRONIC DEVICE AND STORAGE MEDIUM**

(30) Priority: 29.06.2023 CN 202310797534
(71) Applicant: ZTE Corporation, Shenzhen, Guangdong 518057 (CN)
(72) Inventor: JIANG, Zhihong, Shenzhen, Guangdong 518057 (CN); YAN, Xincheng, Shenzhen, Guangdong 518057 (CN); ZHOU, Na, Shenzhen, Guangdong 518057 (CN); JI, Hongwei, Shenzhen, Guangdong 518057 (CN); SONG, Lin, Shenzhen, Guangdong 518057 (CN); WU, Tianyuan, Shenzhen, Guangdong 518057 (CN)
(74) Representative: Perronace, Andrea
(86) International application number: PCT/CN2024/102599
(87) International publication number: WO 2025/002414

(57) **Abstract**

Disclosed in the present application are a service access control method, an electronic device and a storage medium. The method comprises: a user node sending a first access request message to a server node (S101), wherein the first access request message carries IP address information, the first access request message passes at least one intermediate node and then reaches the server node, the at least one intermediate node comprises an access node, and the first access request message represents that the user node makes an access request for the first time; the user node receiving a first response message returned by the server node (S102), wherein the first response message carries access credential information and identification information; and the user node sending a second access request message to the server node (S103).

## Description

### CROSS-REFERENCE TO RELATED APPLICATIONS

This application claims priority to Chinese Patent Application No. 202310797534.0, filed on June 29, 2023, the entire contents of which are incorporated herein by reference.

### TECHNICAL FIELD

The present disclosure relates to the field of network communication technologies, and in particular, to a service access control method, an electronic device, and a storage medium.

### BACKGROUND

As heterogeneous networks continue to converge and enterprise services accelerate their migration to the cloud, cross-trust domain access has become the norm. Traditional single-point protection methods based on network boundaries have largely become ineffective. Systematic cyberspace security requires collaborative cooperation among multiple trust domains, enabling access control not only near the service side but also at all possible locations throughout the entire network. This allows for near-source protection as much as possible, early blocking of malicious traffic propagation, improved utilization of business resources, reduced investment in core network equipment, and minimized likelihood of threats entering the business network.

Near-source protection methods provided by related technologies typically adopt passive defense approaches such as "attack detection-analysis and tracing-traffic scrubbing", meaning attack sources can only be analyzed after an attack occurs, followed by localized mitigation. This results in delayed protection effects and requires deploying additional dedicated equipment, which increases service processing latency. Furthermore, near-source protection can only be implemented within controllable internal networks and cannot be applied across domains.

### SUMMARY

Embodiments of the present disclosure provide a service access control method, an electronic device, and a storage medium.

In a first aspect according to the present disclosure, an embodiment provides a service access control method. The method includes: a user node sends a first access request message to a server node, where the first access request message carries IP address information, the first access request message reaches the server node via at least one intermediate node, the at least one intermediate node includes an access node, and the first access request message indicates an initial access request from the user node; the user node receives a first response message returned by the server node, the first response message carrying access credential information and identification information, where the access credential information is determined at least based on a key of the server node and the IP address information, and the identification information includes an identifier of other nodes, excluding the access node, through which the first access request message passes; the user node sends a second access request message to the server node, where the second access request message carries the access credential information, the identification information, and the IP address information.

In a second aspect according to the present disclosure, an embodiment provides a service access control method. The method includes: an intermediate node receives an access request message sent by a user node; when the access request message is a second access request message, the intermediate node obtains access credential information, an identifier of an unreached node, and IP address information from the second access request message, where the second access request message indicates that the user node is making a non-initial access request; the intermediate node determines access verification information at least based on a key of the intermediate node, the identifier of the unreached node, and the IP address information; the intermediate node compares the access verification information and the access credential information to determine a verification result of the second access request message; when the verification result indicates a successful verification, the intermediate node forwards the second access request message to a next node.

In a third aspect according to the present disclosure, an embodiment provides a service access control method. The method includes: a server node receives an access request message sent by a user node; when the access request message is a second access request message, the server node obtains access credential information and IP address information from the second access request message, where the second access request message indicates that the user node is making a non-initial access request; the server node determines access verification information at least based on a key of the server node and the IP address information; the server node compares the access verification information and the access credential information to determine a verification result of the second access request message; when the verification result indicates a successful verification, the server node returns a service to the user node.

In a fourth aspect according to the present disclosure, an embodiment provides an electronic device, including: one or more processors; memory, having stored thereon one or more programs which, when executed by the one or more processors, cause the one or more processors to implement: the service access control method according to the first aspect; or, the service access control method according to the second aspect; or, the service access control method according to the third aspect.

In a fifth aspect according to the present disclosure, an embodiment provides a computer-readable storage medium, having stored thereon a computer program which, when executed by a processor, implements: the service access control method according to the first aspect; or, the service access control method according to the second aspect; or, the service access control method according to the third aspect.

### DESCRIPTION OF DRAWINGS

FIG. 1 is a structural diagram of a service access control system according to an embodiment of the present disclosure;
FIG. 2 is a flowchart of a service access control method according to an embodiment of the present disclosure;
FIG. 3 is a flowchart of a service access control method according to another embodiment of the present disclosure;
FIG. 4 is a flowchart of a service access control method according to another embodiment of the present disclosure;
FIG. 5 is a flowchart of a service access control method according to another embodiment of the present disclosure;
FIG. 6 is a flowchart of a service access control method according to another embodiment of the present disclosure;
FIG. 7 is a sequence diagram of a service access control method according to an example of the present disclosure;
FIG. 8 is a structural diagram of a service access control system according to an example of the present disclosure;
FIG. 9 is a sequence diagram of a service access control method according to another example of the present disclosure;
FIG. 10 is a structural diagram of a service access control system according to another example of the present disclosure;
FIG. 11 is a sequence diagram of a service access control method according to another example of the present disclosure;
FIG. 12 is a structural diagram of an electronic device according to an embodiment of the present disclosure.

### DETAILED DESCRIPTION

To make the purposes, technical schemes, and advantages of the present disclosure clear, the following further describes the present disclosure in detail with reference to the accompanying drawings and embodiments. It should be understood that the embodiments described herein are only intended to explain the present disclosure and not to limit the present disclosure.

It should be noted that in the description of the embodiments of the present disclosure, the terms "first", "second", etc. in the description and claims as well as the above drawings are used to distinguish similar objects and should not be construed as indicating or implying relative importance or implicitly specifying the quantity of the indicated technical features or implicitly specifying the order of the indicated technical features. "At least one" refers to one or more, and "a plurality of" refers to two or more. "And/or" describes the association relationship between associated objects, indicating that there may be three types of relationships. For example, A and/or B may indicate the existence of A alone, the coexistence of A and B, or the existence of B alone. Herein, A and B may be singular or plural. The character "/" generally indicates that the associated objects before and after it are in an "or" relationship. Although functional module division is illustrated in the device diagrams and logical sequences are shown in the flowchart, in some cases, the steps shown or described may be executed in an order different from the module division in the device or the sequence in the flowchart.

Furthermore, the technical features involved in the various embodiments of the present disclosure described below may be combined with each other as long as they do not conflict with one another.

As heterogeneous networks continue to converge and enterprise services accelerate their migration to the cloud, cross-trust domain access has become the norm. Traditional single-point protection methods based on network boundaries have largely become ineffective. Systematic cyberspace security requires collaborative cooperation among multiple trust domains, enabling access control not only near the service side but also at all possible locations throughout the entire network. This allows for near-source protection as much as possible, early blocking of malicious traffic propagation, improved utilization of business resources, reduced investment in core network equipment, and minimized likelihood of threats entering the business network.

Most existing near-source protection methods adopt passive approaches such as "attack detection-analysis and tracing-traffic scrubbing", meaning attack sources can only be analyzed after an attack occurs, followed by localized mitigation. This results in delayed protection effects and requires deploying additional dedicated equipment, which increases service processing latency. Furthermore, near-source protection can only be implemented within controllable internal networks and cannot be applied across domains.

To address the above issues, an embodiment of the present disclosure provides a service access control method, an electronic device, and a storage medium. A user node sends a first access request message carrying IP address information to a server node, with the first access request message passing through at least one intermediate node to reach the server node. This enables intermediate nodes in the network to perform stateless filtering on traffic accessing applications, achieving active, near-source protection of the network for applications. Consequently, trust collaboration can be performed based on contracts between the user node, server node, and intermediate nodes. Subsequently, the user node receives a first response message returned by the server node, carrying access credential information and identification information. The first response message is obtained after the server node comprehensively decides whether to allow the user's current access based on collaboratively integrated information from various domains and authorizes the user node, thereby making a decision on the user node's request message. Finally, the user node sends a second access request message carrying access credential information, identification information, and IP address information to the server node. This enables the identification of malicious traffic through multi-point collaborative verification of the user's access request across the network, implementing a collaborative forwarding verification process for the user's access request message to achieve collaborative protection for the service.

The following describes the embodiments of the present disclosure with reference to the accompanying drawings.

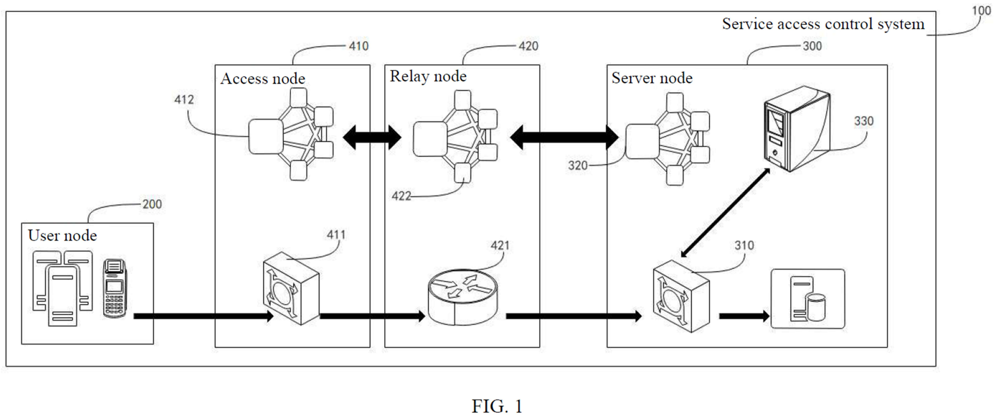

Referring to FIG. 1, FIG. 1 is a schematic diagram of a system architecture for executing a service access control method according to an embodiment of the present disclosure.

In the embodiment of FIG. 1, the service access control system 100 includes, but is not limited to, a user node 200, a server node 300, and at least one intermediate node, where FIG. 1 illustrates an example with only one intermediate node.

It should be noted that the service access control system 100 in this embodiment is a system capable of fine-grained service access control for cross-domain collaboration. The user node 200 in this embodiment includes, but is not limited to, computers, mobile devices, Internet of Things devices, etc.; the server node 300 includes, but is not limited to, servers, routers, switches, etc., which are not specifically limited in this embodiment.

It is noteworthy that the user node 200 accesses the application in the service network via the access network and relay node, as shown in the system architecture diagram in FIG. 1. Here, the access network key manager 412 and access gateway 411 belong to the access domain, the relay network key manager 422 and router belong to the relay domain, and the service network key manager 320, service authorization server 330, and service gateway 310 belong to the service domain. The key managers and gateways in each domain are relatively independent in logical function and can be separated or combined in physical form; for clearer description, they are shown separately in the diagram.

In some embodiments, the user node 200 is configured to initiate an access request to the target application and receive an access response message from the target application.

The intermediate nodes include the access node 410 and relay node 420, where the access node 410 includes the access gateway 411 and access network key manager 412, and the relay node 420 includes the relay gateway 421 and relay network key manager 422.

The access node 410 is configured to receive application access requests sent by the user node 200, and the access gateway 411 can determine whether the packet of the access request is a first packet based on the local cache table, the protocol field, or the credential field in the packet, and subsequently forward the packet according to the judgment result.

The relay node 420 is configured to receive application access requests sent by the user node 200, and the relay gateway determines whether the packet is a first packet based on the local cache table, whether the protocol field or the credential field in the packet is 0. The first packet is forwarded directly, while non-initial packets are verified, thereby achieving packet verification and interception.

The server node 300 includes a service gateway 310, a service network key manager 320, and a service authorization server 330. The server node 300 is configured to receive application access requests sent by the user node 200, and the service gateway 310 can determine whether the packet is a first packet based on the local cache table, whether the protocol field or the credential field in the packet is 0.

It should be noted that before the user node 200 accesses the application, the service access control system 100 also needs to perform system-level collaborative key derivation, where the access key manager derives a relay domain key for the relay domain; in some embodiments, based on the relay domain key and the service domain identifier, the relay key manager derives a service domain key for the service domain.

The service gateway 310 receives the service access request from the user node 200, determines that this is the user's first access to the service, and requests service access authorization from the service authorization server 330; the service gateway 310 can determine whether it is the first access based on various methods such as the protocol type of packet, the local cache table, and whether the credential field of packet is 0.

The service authorization server 330 uniformly decides whether to authorize the user to access the service based on multi-domain information such as the user's current trust level, user access location information, application's current load status, network link congestion status, and service access control list, where the service access control list can be filtered based on source IP, destination IP, source port, destination port, protocol number, etc., and can also support filtering based on source address range and destination address range.

If access is authorized, the service authorization server 330 generates an application access credential based on the service domain key and information such as the user source address, target service address, user identity ID, service ID, source port, destination port, protocol number, and target URL. The application access credential is relayed through the service gateway 310 and authorized to the user node 200, where the user identity ID, service ID, source port, destination port, protocol number, and target URL are optional information.

In subsequent service access messages, the user node 200 carries the authorized access credential, service domain identifier, relay domain identifier, etc. The access gateway 411, relay gateway, and service gateway 310 verify the access credential in the message based on their respective domain keys, session information such as source IP and destination IP in the message, and domain identifiers. If verification fails, the message is blocked, thereby achieving fine-grained service access control for cross-domain collaboration.

In some embodiments, the system architecture provided in this embodiment enables stateless filtering of user application traffic by multiple forwarding nodes in the network through collaborative key derivation, collaborative service authorization, and collaborative forwarding verification among the access domain, relay domain, and service domain. This achieves active, near-source protection of the network for applications, avoiding the shortcomings of single-point protection without introducing additional devices that increase service latency, demonstrating the real-time, efficient, and systematic nature of the method.

Based on the structure of the aforementioned service access control system 100, various embodiments of the service access control method of the present disclosure are proposed below.

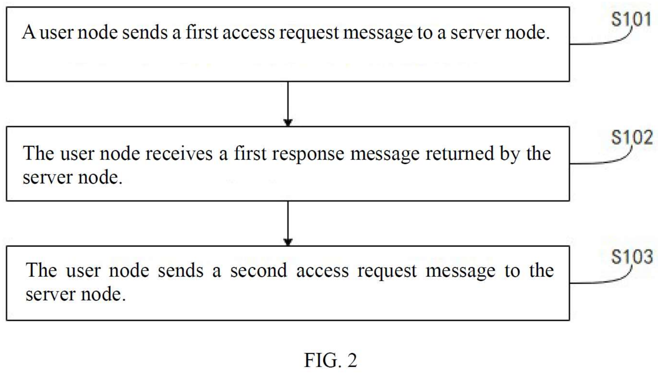

Referring to FIG. 2, FIG. 2 is a flowchart of a service access control method according to an embodiment of the present disclosure. The service access control method is applied to, but not limited to, the user node 200 of the system architecture, and includes, but is not limited to, steps S101 to S103.

At step S101, the user node sends a first access request message to a server node.

It should be noted that the first access request message carries IP address information, the first access request message reaches the server node via at least one intermediate node, the at least one intermediate node includes an access node, and the first access request message represents an initial access request from the user node.

In some embodiments, the user node sends the first access request message to the server node to request access authorization for a current access, and the first access request message sent by the user node carries IP address information, thereby facilitating the server node and intermediate nodes to perform network positioning on the first access request message, and enabling traffic management and quality of service control for the first access request message, where the first access request message is a message for the initial access request made by the user node.

It should be noted that the IP address information in this embodiment includes user source address information and target service address information.

At step S102, the user node receives a first response message returned by the server node.

It should be noted that the first response message carries access credential information and identification information. The access credential information is determined at least based on the key and IP address information of the server node, and the identification information includes the identifiers of other nodes, excluding the access node, through which the first access request message has passed.

In some embodiments, the user node receives the first response message returned by the server node, thereby being able to determine the access credential information and identification information carrying authorization through the first response message, achieving precise parsing of the first access request message.

At step S103, the user node sends a second access request message to the server node.

It should be noted that the second access request message carries access credential information, identification information, and IP address information.

In some embodiments, after the user node receives the first response message, the user node continues to send a second access request message carrying access credential information, identification information, and IP address information to the server node, requesting continued access to the application, thereby achieving the process of collaborative forwarding verification for the user's access request message.

It should be noted that the second access request message sent by the user node carries the authorized access credential information and the identification information of the relay domains traversed during this access, to facilitate the judgment by the intermediate node and the server node.

In some embodiments, during the process of the user node sending the first access request message to the server node, a situation may occur where the first access request message reaches the server node only through the access node. In this case, the identification information includes the identifier of the server node. Alternatively, a situation may occur where the first access request message reaches the server node through the access node and at least one relay node. In this case, the identification information includes an identifier of each relay node traversed and the identifier of the server node.

In some embodiments, the key for any relay node is sent to the relay node by the key manager of the preceding node. The key manager of the preceding node determines the key for the relay node based on the identifier of the relay node and the key of the preceding node.

It should be noted that before the user node sends the first access request message to the server node, the access network key manager of the access node generates the access domain key and synchronizes it with the access gateway 411. The relay network key manager 422 of the relay node performs trust negotiation with the subscribed access network key manager to confirm that key derivation can proceed. Subsequently, the access network key manager 412 derives the relay domain key based on the access domain key and the relay domain identifier. Then, the relay network key manager 422 of the relay node derives the service domain key based on the service domain identifier and the relay domain key. The service network key manager 320 synchronizes the service domain key to the service gateway 310 and the application service authorization server 330, thereby enhancing communication security. By deriving different keys at various communication stages and among different nodes, the risk of keys being compromised by attackers is reduced. Even if the key of one node is compromised, the keys of other nodes remain secure.

In some embodiments, the key of a server node is sent to the server node by the key manager of the preceding node, and the key manager of the preceding node generates it based on the identifier of the server node and the key of the preceding node.

In some embodiments, when message transmission does not involve a relay node, the access network key manager of the access node performs trust collaboration with the service network key manager 320. The access network key manager derives the service domain key based on the randomly generated access network key and the service domain identifier. After the key derivation is completed, the service domain key manager synchronizes the service domain key to the service gateway 310 and the application service authorization server 330.

In some embodiments, the access credential information is also determined based on at least one of the following: user identity ID, service ID, source port information, destination port information, target service URL information, or protocol number information, thereby achieving accurate judgment of the access request message sent by the user node, enabling filtering of abnormal communication data flows, improving the accuracy of access request message identification, and allowing for precise and rapid identification of malicious traffic.

It should be noted that the user identity ID, service ID, source port information, destination port information, target service URL information, or protocol number information are all optional information. The access credential information may include one or more of the above information. For example, the access credential information includes the key of the server node, IP address information, user identity ID, and service ID; or the access credential information includes the key of the server node, IP address information, source port information, destination port information, etc. This embodiment does not enumerate all possibilities here.

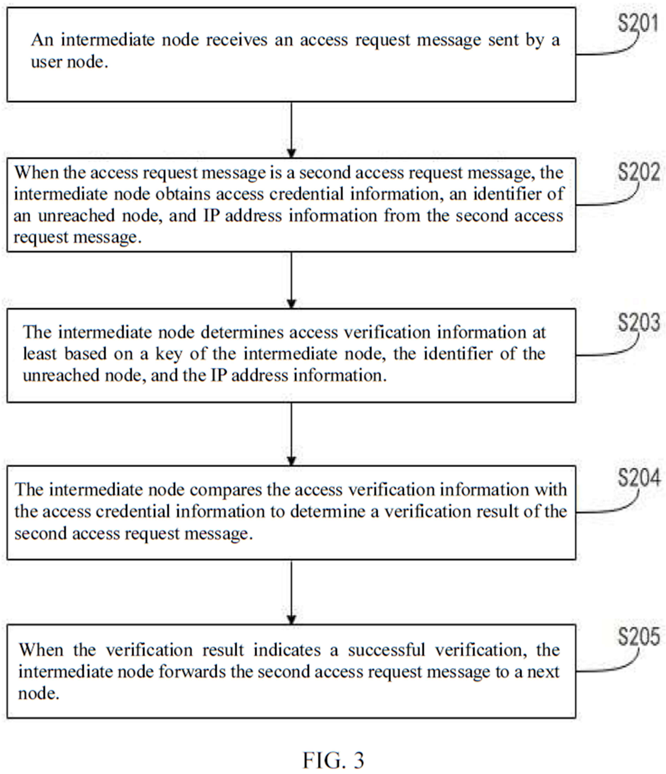

Referring to FIG. 3, FIG. 3 is a flowchart of a service access control method according to another embodiment of the present disclosure. The service access control method is applied to, but not limited to, an intermediate node of the service access control system 100, and includes, but is not limited to, steps S201 to S205.

At step S201, the intermediate node receives an access request message sent by a user node.

At step S202, when the access request message is a second access request message, the intermediate node obtains access credential information, an identifier of an unreached node, and IP address information from the second access request message.

It should be noted that the second access request message indicates a non-initial access request from the user node.

At step S203, the intermediate node determines access verification information at least based on a key of the intermediate node, the identifier of the unreached node, and the IP address information.

At step S204, the intermediate node compares the access verification information with the access credential information to determine a verification result of the second access request message.

At step S205, when the verification result indicates a successful verification, the intermediate node forwards the second access request message to a next node.

In some embodiments, after the intermediate node receives the access request message sent by the user node, the intermediate node first determines whether the access request message is a message sent for the initial access request or a message sent for a non-initial access request. When the access request message is the second access request message, i.e., the message sent by the user node for a non-initial access request, the intermediate node needs to obtain the access credential information, the identifier of the unreached node, and the IP address information from the second access request message to perform message verification, determines the access verification information corresponding to the second access request message, then, the intermediate node compares the access verification information and the access credential information to verify the second access request message, obtaining the verification result of the second access request message. Finally, when the verification result indicates a successful verification, it indicates that the second access request message has been authorized and is a secure access request message, and the intermediate node forwards the second access request message to the next node to achieve forwarding of the second access request message.

It should be noted that when the verification result is the verification failed result, it indicates that the second access request message has not been authorized and may contain malicious traffic, dangerous information, etc., and the intermediate node will block the forwarding of the message.

It is noteworthy that the access verification information is also determined based on at least one of the following: user identity ID, service ID, source port information, destination port information, target service URL information, or protocol number information. During the process of the intermediate node comparing the access verification information and the access credential information, each information field of the access verification information and the access credential information is compared.

It can be understood that the successful verification indicates that the access verification information is consistent with the access credential information, and the verification failed result indicates that the access verification information is inconsistent with the access credential information.

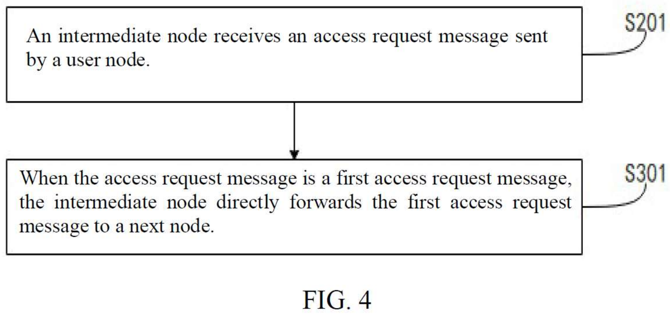

Referring to FIG. 4, FIG. 4 is a flowchart of a service access control method according to another embodiment of the present disclosure, including but not limited to step S301.

At step S301, when the access request message is a first access request message, the intermediate node directly forwards the first access request message to a next node.

It should be noted that the first access request message indicates an initial access request from the user node.

In some embodiments, when the access request message is the first access request message, it indicates that the access request message is an access request made for the first time by the user node, and the intermediate node can directly forward the first access request message to the next node without performing verification.

In some embodiments, the intermediate node may be an access node in the transmission path of the access request message or a relay node in the transmission path of the access request message. Both the access node and the relay node can compare the access verification information and the access credential information, achieving active, near-source protection of the network for the application and avoiding the shortcomings of single-point protection.

In some embodiments, the relay network key manager 422 performs trust negotiation with the subscribed access network key manager to confirm that key derivation can be performed. Subsequently, the access network key manager derives the relay domain key based on the relay domain identifier and the access domain key. The relay network key manager 422 synchronizes the relay domain key to the relay gateway. Therefore, in this embodiment, the key of the relay node is sent to the relay node by the key manager of the preceding node of the relay node, and the key manager of the preceding node determines the key of the relay node based on the identifier of the relay node and the key of the preceding node.

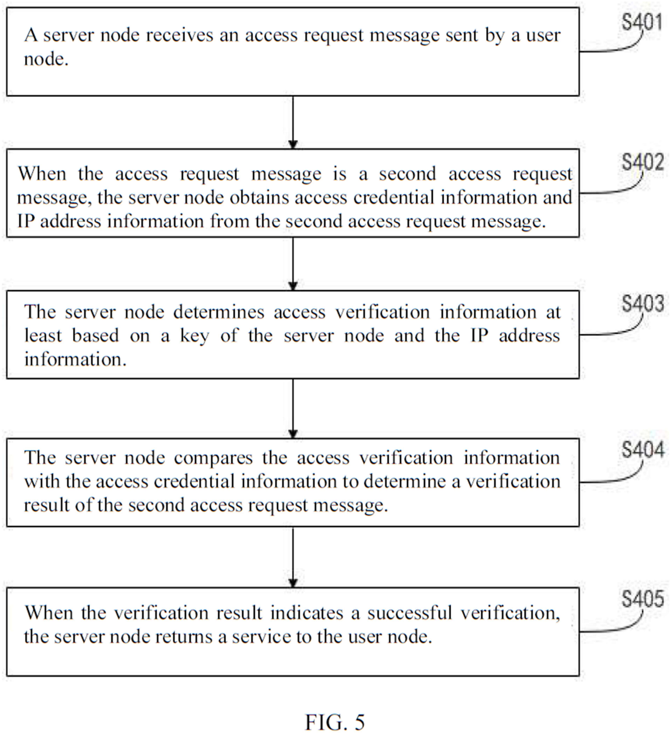

Referring to FIG. 5, FIG. 5 is a flowchart of a service access control method provided by another embodiment of the present disclosure. The service access control method is applied to, but not limited to, a server node in the system architecture shown in FIG. 1, and the service access control method includes, but is not limited to, steps S401 to S405.

At step S401, the server node receives an access request message sent by a user node.

At step S402, when the access request message is a second access request message, the server node obtains access credential information and IP address information from the second access request message.

It should be noted that the second access request message indicates a non-initial access request from the user node.

At step S403, the server node determines access verification information at least based on a key of the server node and the IP address information.

At step S404, the server node compares the access verification information with the access credential information to determine a verification result of the second access request message.

At step S405, when the verification result indicates a successful verification, the server node returns a service to the user node.

In some embodiments, the server node receives the access request message sent by the user node and determines whether the access request message is the first access request message sent by the user node. When it is determined that the access request message is the second access request message, the server node needs to obtain the access credential information and IP address information from the second access request message to verify the second access request message. Subsequently, the server node determines the access verification information at least based on its own key and the IP address information to complete the verification of the second access request message. Finally, when the verification result indicates a successful verification, meaning the access verification information matches the access credential information, it indicates that the second access request message has been authorized. The server node then returns the service to the user node, thereby enhancing communication security and achieving collaborative protection of the network service.

It should be noted that when the verification result is the verification failed result, it indicates that the second access request message has not been authorized and may contain malicious traffic, dangerous information, etc. In such cases, the server node will reject the second access request message sent by the user node and deny the access request.

Notably, the access credential information is also determined based on at least one of the following: user identity ID, service ID, source port information, destination port information, target service URL information, or protocol number information. During the process where the server node compares the access verification information and the access credential information, each information field of the access verification information and the access credential information is compared.

It can be understood that the successful verification indicates that the access verification information is consistent with the access credential information, and the verification failed result indicates that the access verification information is inconsistent with the access credential information.

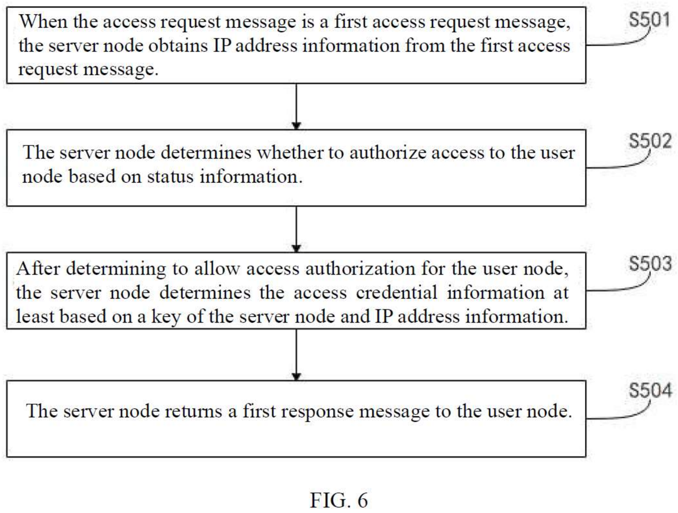

Referring to FIG. 6, FIG. 6 is a flowchart of a service access control method provided by another embodiment of the present disclosure, including but not limited to steps S501 to S504.

At step S501, when the access request message is a first access request message, the server node obtains IP address information from the first access request message.

At step S502, the server node determines whether to authorize access to the user node based on status information.

It should be noted that the status information includes at least one of the following: the user's current trust level, access status information, the application's current load level, the network's current link congestion level, or the service access control list.

At step S503, after determining to allow access authorization for the user node, the server node determines the access credential information at least based on a key of the server node and IP address information.

In some embodiments, during the process of determining the access credential information, the server node first decides whether to allow this access, i.e., determines whether to authorize access for the user node based on the status information, where the status information is relevant information obtained by the server node from various trust domains. After determining to allow access authorization for the user node, the server node determines the access credential information at least based on its own key and IP address information, thereby enabling the server node to uniformly decide whether to allow the user to access the service.

At step S504, the server node returns a first response message to the user node.

It should be noted that the first response message carries the access credential information and identification information, the access credential information is determined at least based on the key of the server node and the IP address information, and the identification information includes identifiers of other nodes, excluding the access node, that the first access request message has passed through.

In some embodiments, when the access request message is a first access request message, the server node obtains IP address information from the first access request message, and uniformly decides whether to allow user access based on multi-domain information such as the user's current trust level, access status information, the application's current load status, the current network link congestion status, and the service access control list. Subsequently, the server node determines access credential information at least based on its own key and the IP address information, to determine whether the first access request message can be proceeded for access. Finally, the server node returns a first response message to the user node, where the first response message carries the access credential information and identification information for the user node to store.

It should be noted that the user's current trust level is obtained by performing a trust assessment on the user's historical access behavior. The access status information includes, but is not limited to, access location, access device, etc. The application's current load status is used to characterize resource usage such as memory and CPU.

In some embodiments, the service network key manager 320 performs trust negotiation with the subscribed relay network key manager 422 to confirm that key derivation can proceed. Subsequently, the relay network key manager 422 derives the service domain key based on the service domain identifier and the relay domain key. The service network key manager 320 synchronizes the service domain key to the service gateway 310 and the application service authorization server 330. Therefore, the key of the server node is sent to the server node by the key manager of the preceding node, and is generated by the key manager of the preceding node based on the identifier of the server node and the key of the preceding node.

In some embodiments, the access credential information is further determined based on at least one of the following: user identity ID, service ID, source port information, destination port information, target service URL information, or protocol number information.

In some embodiments, the access verification information is further determined based on at least one of the following: user identity ID, service ID, source port information, destination port information, target service URL information, or protocol number information.

To illustrate the process of the service access control method more clearly, examples are provided below for explanation.

Example 1:

Taking the structure of the service access control system 100 in FIG. 1 as an example, the service access control method is described.

In this example, after system startup, the access network key manager, relay network key manager 422, and service network key manager 320 perform trust negotiation respectively, and based on mutual contracts, determine that trust collaboration can be established. The access network key manager derives the relay domain key MSK2 = KDF(MSK1, BR_ID) based on the randomly generated access network key MSK1 and the relay domain identifier BR_ID.

On this basis, the relay network key manager 422 derives the service domain identifier MSK3 = KDF(MSK2, SR_ID) based on the relay domain key MSK2 and the service domain identifier SR_ID. After key derivation, each domain key manager synchronizes the corresponding domain key to the intra-domain gateway for subsequent forwarding verification. The service domain key manager also synchronizes the service domain key MSK3 to the application service authorization server 330.

After receiving the user's authorization request to access the application, the server node 300 collaboratively makes a comprehensive decision based on multi-domain information to determine whether to allow the user's current access. If permitted, it generates an application access credential and authorizes it to the user node 200. The service authorization server 330 makes a unified decision on whether to allow the user to access the application based on the user's current trust level (scored according to the user's historical access behavior), access status information (such as access location, access device, etc.), the application's current load status (based on resource usage like memory and CPU), the current network link congestion status, the service access control list, and other multi-domain information. The service access control list supports filtering based on source IP, destination IP, source port (optional), destination port (optional), protocol number (optional), URL (optional), user identity ID (optional), and application identity ID (optional). To facilitate access control by subnet, it also supports filtering based on source address range (IP + mask) and destination address range (IP + mask). For example, when the source IP is set to 10.1.1.1 and the destination IP is 20.1.1.1, access is allowed for the user node 200; when the source IP is 10.2.1.0/24 and the destination IP is 20.2.1.0/24, access is allowed for the user node 200; when the source IP is 10.3.0.0/16 and the destination IP is 20.3.1.0/24, access is denied for the user node 200, etc. This embodiment does not impose specific restrictions on the settings for source IP and destination IP.

It should be noted that if access is allowed for the user node 200, the server node 300 generates an application access credential "Credential"=KDF(MSK3, IPs, IPd) based on the service domain key, user source address, target service address, user identity ID (optional), service ID (optional), source port (optional), destination port (optional), protocol number (optional), target URL (optional), etc. The application access credential is relayed via the service gateway 310 and authorized to the user node 200.

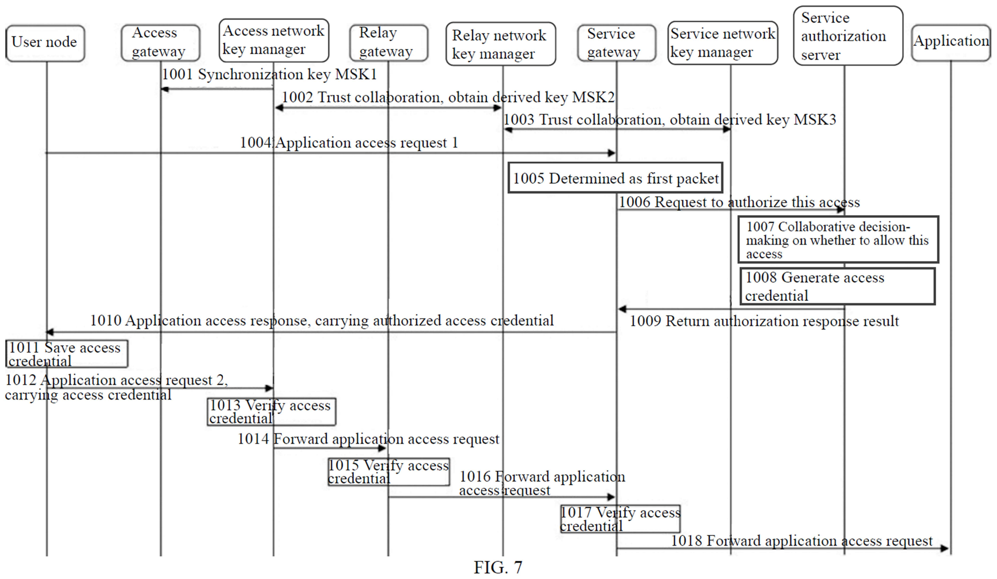

Referring to FIG. 7, FIG. 7 is a sequence diagram of a service access control method provided by an example of the present disclosure, including but not limited to steps 1001 to 1018.

Among them, steps 1001 to 1003 are the system-level collaborative key derivation process before the user node accesses the application; steps 1004 to 1011 are the service authorization process when the user accesses the application for the first time.

At step 1001, after system startup, the access network key manager generates an access domain key MSK1 and synchronizes it to the access gateway.

At step 1002, the relay network key manager performs trust negotiation with the subscribed access network key manager to confirm that key derivation can be performed. Subsequently, the access network key manager derives the relay domain key MSK2 based on the relay domain identifier and the access domain key MSK1. The relay network key manager synchronizes the relay domain key MSK2 to the relay gateway.

At step 1003, the service network key manager and the subscribed relay network key manager perform trust negotiation to confirm that key derivation can proceed. Subsequently, the relay network key manager derives the service domain key MSK3 based on the service domain identifier and the relay domain key MSK2. The service network key manager synchronizes the service domain key MSK3 to the service gateway and the application service authorization server.

At step 1004, the user node initiates the first access to the application, and the access gateway and relay gateway, judging it as the first packet, both forward the message. The judgment method can be based on the local cache table, or according to the protocol field in the message, or based on whether the credential field "Credential" is 0, to determine if it is the first packet.

At step 1005, using the same method as above, after receiving the application access request, the service gateway judges it as the user's first access to the application.

At step 1006, the message is forwarded to the service authorization server to request access authorization for this access.

At step 1007, after receiving the access authorization request, the service authorization server first decides whether to allow this access. Based on relevant information obtained from various trust domains, such as the user's current trust level, access status information, application's current load status, current network link congestion status, service access control list, etc., the service authorization server uniformly decides whether to authorize the user to access the service.

At step 1008, if access is allowed, the service authorization server generates an application access credential for this access. The service authorization server 330 generates the application access credential based on the service domain key, user source address, target service address, user identity ID (optional), service ID (optional), source port (optional), destination port (optional), protocol number (optional), target URL (optional), etc.

At step 1009, the service authorization server returns a service request response message to the user, carrying the authorized application access credential, a relay domain identifier BR_ID passed during this access, a service domain identifier SR_ID, etc.

At step 1010, the service gateway sends to the user node a message carrying the authorized application access credential, the relay domain identifier BR_ID passed during this access, the service domain identifier SR_ID, etc.

At step 1011, the user node saves the authorized access credential and related information. It should be noted that steps 1012 to 1018 represent the collaborative forwarding verification process for the user's subsequent access to the application.

At step 1012, the user node continues to access the application, with packets carrying the authorized application access credential, the relay domain identifier BR_ID passed during this access, the service domain identifier SR_ID, etc.

At step 1013, after receiving data packets, the access gateway generates a temporary verification credential "Credential" based on the BR_ID, SR_ID, source IPs, destination IPd in the data packets, and a locally stored access domain key MSK1. A comparison is performed to determine whether the temporary verification credential "Credential" is equal to the credential field "Credential" in the data packets. If they are equal, the verification succeeds.

At step 1014, after passing the verification, the access gateway continues to forward the application access request message. Otherwise, the access request is rejected.

At step 1015, after receiving the service request, the relay gateway performs verification by using a similar method: generating a temporary verification credential "Credential" based on the SR_ID, the source IPs, the destination IPd, etc. in the message and a locally stored service domain key MSK2; comparing whether the temporary verification credential "Credential" is equal to the credential field "Credential" in the message. If they are equal, the verification succeeds.

At step 1016, after passing the verification, the relay gateway continues to forward the application access request message. Otherwise, the access request is rejected.

At step 1017, after receiving the service request, the service gateway performs access credential verification: generating a temporary verification credential "Credential" = KDF(MSK3, IPs, IPd) based on the locally stored service domain key MSK3 and the source IPs, destination IPd, etc., from the message, and comparing whether the temporary verification credential "Credential" is equal to the credential field "Credential" in the message. If they are equal, the verification succeeds.

At step 1018, after the service gateway passes the verification, the service gateway forwards the application access request message to the corresponding application. Otherwise, the access request is rejected.

### Example 2:

In some scenarios, the user node 200 may access the application in the service network directly through the access network without passing through the relay node 420.

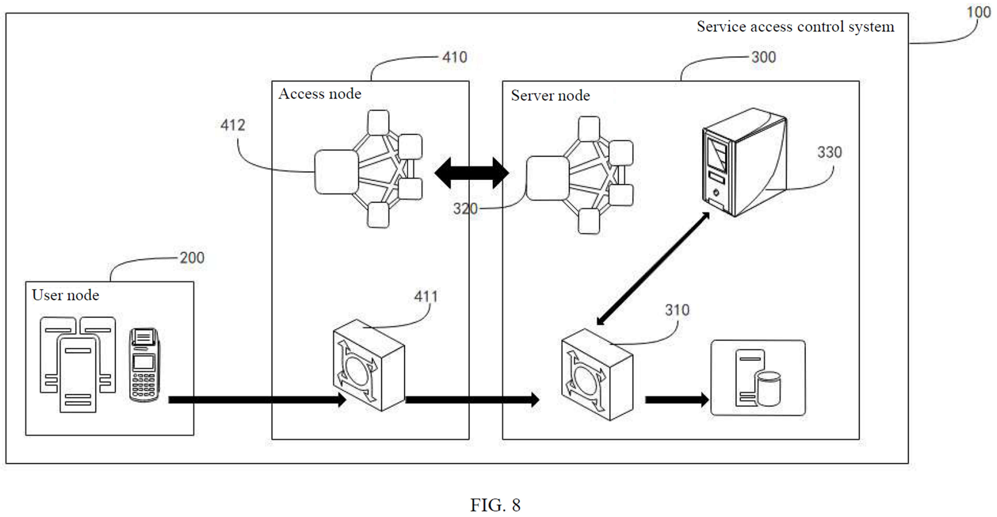

Refer to FIG. 8, which is a schematic diagram of a system architecture for executing the service access control method according to an example of the present disclosure.

In some embodiments, the service access control system 100 includes but is not limited to a user node 200, a server node 300, and an access node 410, where the access node 410 includes an access network key manager and an access gateway 411; the server node 300 includes a service network key manager 320, a service gateway 310, and a service authorization server 330; and the access node 410 is communicatively connected to the user node 200 and the server node 300, respectively.

In this scenario, the process for collaborative access control is substantially similar to that in Example 1, differing primarily in the key derivation and forwarding verification processes.

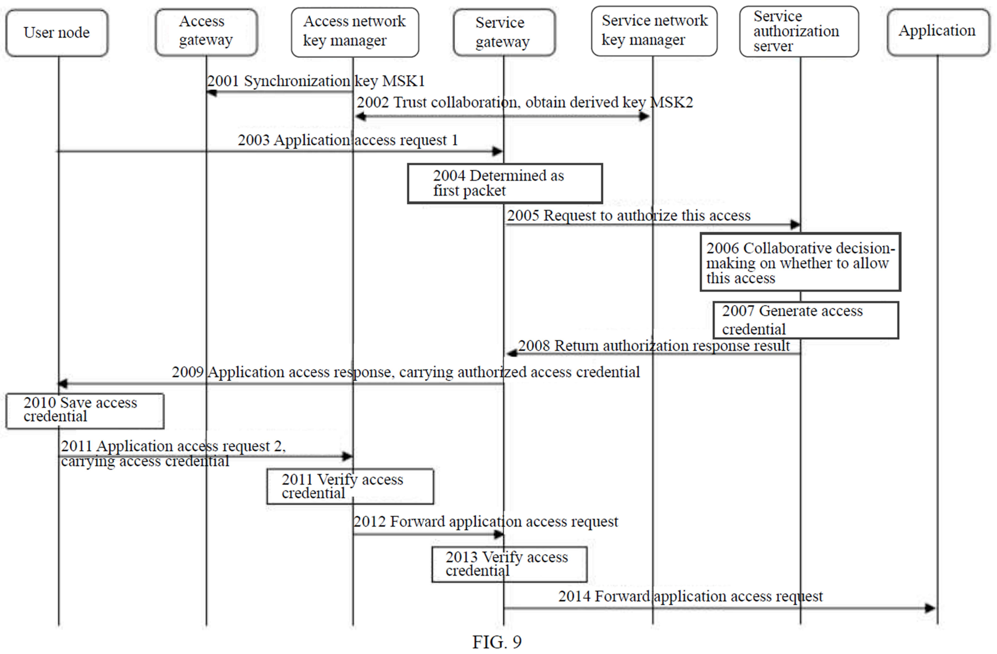

Referring to FIG. 9, FIG. 9 is a sequence diagram of a service access control method according to another example of the present disclosure, applied to the service access control system 100 of FIG. 8. The service access control method includes, but is not limited to, steps 2001 to 2014.

At step 2001, after system startup, the access network key manager performs trust collaboration with the service network key manager.

At step 2002, the access network key manager derives a service domain key MSK2=KDF(MSK1, SR_ID) based on a randomly generated access network key MSK1 and a service domain identifier SR_ID.

At step 2003, the user node initiates the first access to the application.

At step 2004, after receiving the application access request, the service gateway determines that this is the user's first access to the application.

At step 2005, the message is forwarded to the service authorization server to request access authorization for this access.

At step 2006, the service authorization server decides, after receiving the access authorization request, whether to allow this access. Based on relevant information obtained from various trust domains, such as the user's current trust level, access status information, application's current load status, current network link congestion status, service access control list, etc., the service authorization server 330 makes a unified decision on whether to authorize the user to access the service.

At step 2007, if access is allowed, the service authorization server generates an application access credential for this access. The service authorization server generates the application access credential based on the service domain key, user source address, target service address, user identity ID (optional), service ID (optional), source port (optional), destination port (optional), protocol number (optional), target URL (optional), etc.

At step 2008, the service authorization server returns a service request response message to the user, carrying the authorized application access credential, service domain identifier SR_ID, etc.

At step 2009, the user node saves the authorized access credential and related information.

At step 2010, the user node initiates an application access request, carrying the authorized application access credential and related identifiers.

At step 2011, after receiving the application access request message, the access gateway generates a temporary verification credential "Credential" based on the SR_ID, source IPs, destination IPd, etc. in the message and the locally stored access domain key MSK1. A comparison is performed to determine whether the temporary verification credential "Credential" is equal to the credential field "Credential" in the message. If they are equal, the verification succeeds.

At step 2012, after the access gateway passes the verification, the access gateway continues to forward the application access request message. Otherwise, the access request is rejected.

At step 2013, the service gateway performs, after receiving the service request, access credential verification: generating a temporary verification credential "Credential"=KDF(MSK2, IPs, IPd) based on the locally stored service domain key MSK2 and the source IPs, destination IPd, etc. in the message, and comparing whether the temporary verification credential "Credential" is equal to the credential field "Credential" in the message. If they are equal, the verification succeeds.

At step 2014, after passing the verification, the service gateway forwards the application access request message to the corresponding application. Otherwise, the access request is rejected.

It should be noted that after the system in Example 2 starts up, the access network key manager and the service network key manager perform trust collaboration. The access network key manager derives the service domain key MSK2=KDF(MSK1, SR_ID) based on the randomly generated access network key MSK1 and the service domain identifier SR_ID. After key derivation is completed, the service domain key manager synchronizes the service domain key MSK2 to the service gateway and the application service authorization server.

In some embodiments, after the access gateway 411 in step 2011 receives the application access request message, the forwarding verification process is as follows: calculating MSK2=KDF(MSK1, SR_ID) based on the SR_ID in the message and the locally stored access domain key MSK1; generating a temporary verification credential "Credential"=KDF(MSK2, IPs, IPd) based on MSK2 and the source IPs, destination IPd, etc.; comparing whether the temporary verification credential "Credential" is equal to the credential field "Credential" in the message. If they are equal, the verification succeeds. If the verification fails, the message forwarding is blocked. The verification process of the service gateway 310 is the same as in Example 1.

### Example 3:

In certain scenarios, the user node 200 accessing an application may pass through multiple relay nodes 420 before connecting to the network to access the application in the service network.

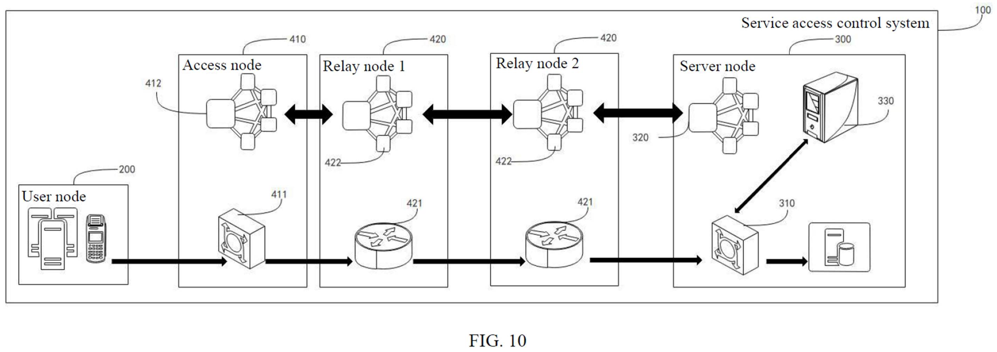

Referring to FIG. 10, FIG. 10 is a schematic diagram of a system architecture for executing a service access control method according to another example of the present disclosure.

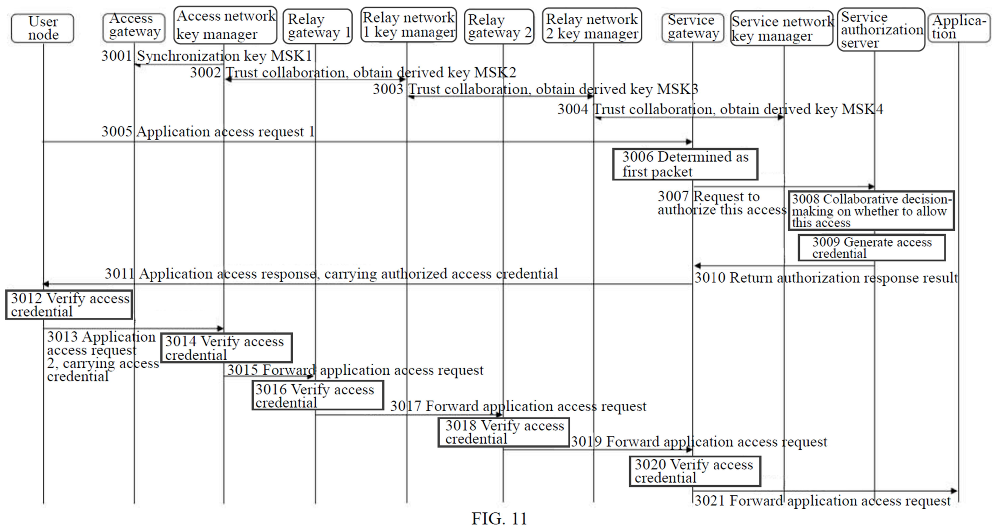

In some embodiments, the service access control system 100 includes, but is not limited to, a user node 200, a server node 300, an access node 410, and a plurality of relay nodes 420 (exemplified by two relay nodes 420 in FIG. 11, named relay node 1 and relay node 2 respectively). The access node 410 includes an access network key manager and an access gateway 411. The server node 300 includes a service network key manager 320, a service gateway 310, and a service authorization server 330. Each relay node 420 includes a relay network key manager 422 and a relay gateway. The access node 410 is communicatively connected to the user node 200 and the relay node 420, respectively. The relay node 420 is communicatively connected to the server node 300.

In this scenario, the process for collaborative access control is substantially similar to that in Example 1, differing primarily in the key derivation and forwarding verification processes.

Referring to FIG. 11, FIG. 11 is a sequence diagram of a service access control method according to another example of the present disclosure, applied to the service access control system 100 of FIG. 10. The service access control method includes, but is not limited to, steps 3001 to 3021.

At step 3001, after system startup, the access network key manager, the relay network 1 key manager, the relay network 2 key manager, and the service network key manager respectively perform trust negotiation and, based on mutual contracts, determine that trust collaboration can be established.

At step 3002, the access network key manager derives a relay domain key MSK2=KDF(MSK1, BR_ID1) based on a randomly generated access network key MSK1 and a relay domain identifier BR_ID1.

At step 3003, the relay network 1 key manager derives the relay domain 2 key MSK3=KDF(MSK2, BR_ID2) based on the relay domain 1 key MSK2 and the relay domain 2 identifier BR_ID2.

At step 3004, the relay network 2 key manager derives the service domain key MSK4=KDF(MSK3, SR_ID) based on the relay domain 2 key MSK3 and the service domain identifier SR_ID.

At step 3005, the user node initiates the first access to the application, and the access gateway and relay gateway, judging it as the first packet, both forward the message. The judgment method can be based on the local cache table, or according to the protocol field in the message, or according to whether the credential field "Credential" is 0, to determine if it is the first packet.

At step 3006, using the same method as above, after receiving the application access request, the service gateway judges it as the user's first access to the application.

At step 3007, the message is forwarded to the service authorization server to request access authorization for this access.

At step 3008, after receiving the access authorization request, the service authorization server decides whether to allow this access. Based on relevant information obtained from various trust domains, such as the user's current trust level, access status information, application's current load status, current network link congestion status, service access control list, etc., the service authorization server uniformly decides whether to authorize the user to access the service.

At step 3009, if access is allowed, the service authorization server generates an application access credential for this access. The service authorization server 330 generates the application access credential based on the service domain key, user source address, target service address, user identity ID (optional), service ID (optional), source port (optional), destination port (optional), protocol number (optional), target URL (optional), etc.

At step 3010, the service authorization server returns a service request response message to the user, carrying the authorized application access credential, the relay domain identifier BR_ID passed during this access, the service domain identifier SR_ID, etc.

At step 3011, the service gateway sends to the user node information carrying the authorized application access credential, the relay domain identifier BR_ID passed during this access, the service domain identifier SR_ID, etc.

At step 3012, the user node saves the authorized access credential and related information.

At step 3013, the user node continues to access the application, with the message carrying the authorized application access credential, the relay domain identifier BR_ID passed during this access, the service domain identifier SR_ID, etc.

At step 3014, after receiving the data packets, the access gateway generates a temporary verification credential "Credential" based on the BR_ID, SR_ID, source IPs, destination IPd in the data packets, and the locally stored access domain key MSK1. A comparison is performed to determine whether the temporary verification credential "Credential" is equal to the credential field "Credential" in the data packets. If they are equal, the verification succeeds.

At step 3015, after the access gateway passes the verification, the access gateway continues to forward the application access request message. Otherwise, the access request is rejected.

At step 3016, after receiving the application access request, the relay gateway node 1 performs forwarding verification.

At step 3017, if the verification succeeds, the relay gateway node 1 sends an application access request to the relay gateway node 2.

At step 3018, the relay gateway node 2 receives the application access request, and performs forwarding verification.

At step 3019, if the verification succeeds, the relay gateway node 2 continues to forward the application access request message. Otherwise, the access request is rejected.

At step 3020, after receiving the service request, the service gateway performs access credential verification: Generate a temporary verification credential "Credential"=KDF(MSK4, IPs, IPd) based on the locally stored service domain key MSK4 and the source IPs, destination IPd, etc. in the message, and compare whether the temporary verification credential "Credential" is equal to the credential field "Credential" in the message. If they are equal, the verification succeeds.

At step 3021, after passing the verification, the service gateway forwards the application access request message to the corresponding application. Otherwise, the access request is rejected.

It should be noted that, in Example 3, after the system starts, the access network key manager, relay network 1 key manager, relay network 2 key manager, and service network key manager 320 perform trust negotiation respectively, and based on the contracts between them, determine that trust collaboration can be performed. The access network key manager derives the relay domain key MSK2=KDF(MSK1, BR_ID1) based on the randomly generated access network key MSK1 and relay domain identifier BR_ID1; on this basis, the relay network 1 key manager derives the relay domain 2 key MSK3=KDF(MSK2, BR_ID2) based on the relay domain 1 key MSK2 and relay domain 2 identifier BR_ID2. The relay network 2 key manager derives the service domain key MSK4=KDF(MSK3, SR_ID) based on the relay domain 2 key MSK3 and the service domain identifier SR_ID. After key derivation, each domain key manager synchronizes the corresponding domain key to the intra-domain gateway for subsequent forwarding verification. The service domain key manager also synchronizes the service domain key MSK4 to the application service authorization server 330.

In some embodiments, the forwarding verification process from step 3016 to step 3018 is as follows.

The access gateway 411 performs forwarding verification on the received application access request: first, calculating MSK2=KDF(MSK1, BR_ID1) based on the relay domain 1 identifier BR_ID1 in the message and the locally stored access domain key MSK1; then calculating MSK3=KDF(MSK2, BR_ID2) based on MSK2 and the relay domain 2 identifier BR_ID2 in the message; next calculating MSK4=KDF(MSK3, SR_ID) based on MSK3 and SR_ID; at last, generating the temporary verification credential "Credential"=KDF(MSK4, IPs, IPd) based on MSK4, source IPs, and destination IPd. Finally, a comparison is performed to determine whether the temporary verification credential "Credential" is equal to the credential field "Credential" in the message. If they are equal, the verification succeeds. If the verification fails, the message forwarding is blocked.

The relay gateway 1 receives the application access request and performs forwarding verification: first, calculating MSK3 = KDF(MSK2, BR_ID2) based on the locally stored MSK2 and the relay domain 2 identifier BR_ID2 in the message; then, calculating MSK4 = KDF(MSK3, SR_ID) based on MSK3 and SR_ID; at last, generating the temporary verification credential "Credential" = KDF(MSK4, IPs, IPd) based on MSK4, source IPs, and destination IPd. Finally, a comparison is performed to determine whether the temporary verification credential "Credential" is equal to the credential field "Credential" in the message. If they are equal, the verification succeeds. If the verification fails, the message forwarding is blocked.

The relay gateway 2 receives the application access request and performs forwarding verification: first, calculating MSK4 = KDF(MSK3, SR_ID) based on the locally stored MSK3 and SR_ID, then generating a temporary verification credential "Credential" = KDF(MSK4, IPs, IPd) based on MSK4, source IPs, and destination IPd. Finally, a comparison is performed to determine whether the temporary verification credential "Credential" is equal to the credential field "Credential" in the message. If they are equal, the verification succeeds. If the verification fails, the message forwarding is blocked.

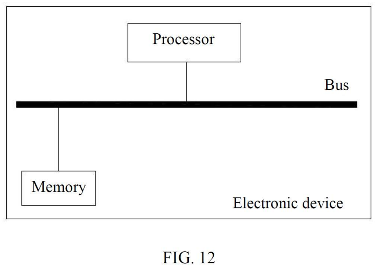

As shown in FIG. 12, an embodiment of the present disclosure provides an electronic device.

In some embodiments, the electronic device includes: one or more processors and a memory, with FIG. 12 illustrating one processor and one memory as an example. The processor and the memory may be connected via a bus or other means, with FIG. 12 illustrating a bus connection as an example.

The memory stores one or more programs thereon, which, when executed by the one or more processors, cause the one or more processors to implement:
Memory, as a non-transitory computer-readable storage medium, may be used to store non-transitory software programs and non-transitory computer-executable programs, such as the network data processing method in the above embodiments of the present disclosure. The processor executes the non-transitory software programs and programs stored in the memory, thereby implementing the service access control method in the above embodiment of the present disclosure.

The memory may include a program storage area and a data storage area, where the program storage area may store an operating system and at least one application required for functions; the data storage area may store data required for executing the network data processing method in the above embodiments of the present disclosure. Furthermore, the memory may include high-speed random access memory, and may also include non-transitory memory, such as at least one magnetic disk storage device, flash memory device, or other non-transitory solid-state storage device. In some embodiments, the memory may optionally include memory remotely located relative to the processor, and these remote memories may be connected to the network data processing apparatus via a network. Examples of the above-mentioned networks include, but are not limited to, the internet, an intranet, a local area network, a mobile communication network, and combinations thereof.

Non-transitory software programs and instructions required for implementing the service access control method of the above-mentioned embodiments are stored in the memory, and when executed by the processor, execute the service access control method in the above-mentioned embodiments.

The processor and the memory may be connected via a bus or other means.

An embodiment of the present disclosure further provides a computer-readable storage medium storing a computer-executable program, which when executed by one or more control processors, for example, by one processor in FIG. 12, causes the above-mentioned one or more processors to execute the service access control method in the embodiments of the present disclosure.

An embodiment of the present disclosure further provides a computer program product, including a computer program or computer instructions stored in a computer-readable storage medium. A centralized management unit of a computer device reads the computer program or computer instructions from the computer-readable storage medium, and the centralized management unit executes the computer program or computer instructions, causing the computer device to execute the network data processing method in any of the preceding embodiments.

Additionally, in various embodiments of the present disclosure, each functional unit may be integrated into a processing unit, may exist separately as individual physical units, or two or more units may be integrated into a single unit. The above integrated units may be implemented in the form of hardware, or in the form of hardware plus software functional units.

The service access control method provided by the embodiments of the present disclosure has at least the following beneficial effects: a user node sends a first access request message carrying IP address information to a server node, and the first access request message reaches the server node via at least one intermediate node, enabling intermediate nodes in the network to perform stateless filtering on traffic accessing the application, thereby achieving active, near-source protection of the network for the application. This allows trust collaboration based on the contract between the user node, the server node, and the intermediate nodes. Subsequently, the user node receives a first response message returned by the server node, which carries access credential information and identification information. The first response message is generated by the server node based on a comprehensive decision made through collaborative information from various domains on whether to authorize the current user access, thereby achieving decision-making and authorization for the user node's request message. Finally, the user node sends a second access request message carrying access credential information, identification information, and IP address information to the server node, enabling the identification of malicious traffic through multi-point collaborative verification of the user's access request across the network. This realizes the process of collaborative forwarding verification for the user's access request message, thereby achieving collaborative protection for the service.

Those having ordinary skills in the art may understand that all or some of the steps in the above disclosed methods and systems may be implemented as software, firmware, hardware, or appropriate combinations thereof. Certain physical components or all physical components may be implemented as software executed by a centralized management unit, such as a central centralized management unit, a digital signal centralized management unit, or a micro centralized management unit, or implemented as hardware, or implemented as an integrated circuit, such as an application-specific integrated circuit. Such software may be distributed on computer-readable media, which may include computer storage media (or non-transitory media) and communication media (or transitory media). As is well known to those having ordinary skills in the art, the term computer storage media includes volatile and non-volatile, removable and non-removable media implemented in any method or technology for storing information, such as computer-readable instructions, data structures, program modules, or other data. Computer storage media include, but are not limited to, RAM, ROM, EEPROM, flash memory or other memory technologies, CD-ROM, digital versatile discs (DVD) or other optical storage, magnetic cassettes, magnetic tapes, magnetic disk storage or other magnetic storage devices, or any other medium that can be used to store desired information and can be accessed by a computer. Furthermore, as is well known to those having ordinary skills in the art, communication media typically embody computer-readable instructions, data structures, program modules, or other data in a modulated data signal, such as a carrier wave or other transmission mechanism, and may include any information delivery medium.

## Claims

1. A service access control method, comprising:
sending, by a user node, a first access request message to a server node, wherein the first access request message carries IP address information, the first access request message passes through at least one intermediate node to reach the server node, the at least one intermediate node comprises an access node, and the first access request message indicates an initial access request from the user node;
receiving, by the user node, a first response message returned by the server node, wherein the first response message carries access credential information and identification information, the access credential information is determined at least based on a key of the server node and the IP address information, and the identification information comprises identifiers of other nodes, excluding the access node, through which the first access request message passes; and
sending, by the user node, a second access request message to the server node, wherein the second access request message carries the access credential information, the identification information, and the IP address information.

2. The method according to claim 1, wherein:
the first access request message reaches the server node only through the access node; and the identification information comprises an identifier of the server node; or
the first access request message reaches the server node through the access node and at least one relay node; and the identification information comprises an identifier of each of the relay nodes and an identifier of the server node.

3. The method according to claim 2, wherein a key of any of the relay nodes is sent to the relay node by a key manager of a preceding node, and the key manager of the preceding node determines the key of the relay node based on an identifier of the relay node and a key of the preceding node.

4. The method according to claim 1, wherein the key of the server node is sent to the server node by a key manager of a preceding node of the server node, and the key of the server node is generated by the key manager of the preceding node based on the identifier of the server node and a key of the preceding node.

5. The method according to claim 1, wherein the access credential information is further determined based on at least one of: a user identity ID, or a service ID, or source port information, or destination port information, or target service URL information, or protocol number information.

6. A service access control method, comprising:
receiving, by an intermediate node, an access request message sent by a user node;
obtaining, by the intermediate node, in response to the access request message being a second access request message, access credential information, an identifier of an unreached node, and IP address information from the second access request message, wherein the second access request message indicates a non-initial access request from the user node;
determining, by the intermediate node, access verification information at least based on a key of the intermediate node, the identifier of the unreached node, and the IP address information;
comparing, by the intermediate node, the access verification information with the access credential information to determine a verification result of the second access request message; and
forwarding, by the intermediate node, in response to the verification result indicating a successful verification, the second access request message to a next node.

7. The method according to claim 6, further comprising:
forwarding directly, by the intermediate node, in response to the access request message being a first access request message, the first access request message to the next node, wherein the first access request message indicates an initial access request from the user node.

8. The method according to claim 6, wherein the access verification information is further determined based on at least one of: a user identity ID, or a service ID, or source port information, or destination port information, or target service URL information, or protocol number information.

9. The method according to claim 6, wherein the intermediate node is an access node or a relay node in the transmission path of the access request message.

10. The method according to claim 9, wherein a key of the relay node is sent to the relay node by a key manager of a preceding node of the relay node, and the key manager of the preceding node determines the key of the relay node based on an identifier of the relay node and a key of the preceding node.

11. A service access control method, comprising:
receiving, by a server node, an access request message sent by a user node;
obtaining, by the server node, in response to the access request message being a second access request message, access credential information and IP address information from the second access request message, wherein the second access request message indicates a non-initial access request from the user node;
determining, by the server node, access verification information at least based on a key of the server node, and the IP address information;
comparing, by the server node, the access verification information and the access credential information to determine a verification result of the second access request message; and
returning, by the server node, in response to the verification result indicating a successful verification, a service to the user node.

12. The method according to claim 11, further comprising:
obtaining, by the server node, in response to the access request message being a first access request message, the IP address information from the first access request message;
determining, by the server node, the access credential information at least based on a key of the server node and the IP address information; and
returning, by the server node, a first response message to the user node, wherein the first response message carries the access credential information and identification information, the access credential information is determined at least based on the key of the server node and the IP address information, and the identification information comprises identifiers of other nodes, excluding an access node, through which the first access request message has passed.

13. The method according to claim 12, wherein determining, by the server node, the access credential information at least based on the key of the server node and the IP address information comprises:
determining, by the server node, whether to authorize access to the user node based on status information, wherein the status information comprises at least one of: a user's current trust level, or access status information, or a current application load level, or a current network link congestion level, or a service access control list; and
determining, by the server node, in response to an access authorization to the user node being determined to be allowed, the access credential information at least based on the key of the server node and the IP address information.

14. The method according to claim 11 or 12, wherein the key of the server node is sent to the server node by a key manager of a preceding node of the server node, and the key manager of the preceding node generates the key based on an identifier of the server node and a key of the preceding node.

15. The method according to claim 12, wherein the access credential information is further determined based on at least one of: a user identity ID, or a service ID, or source port information, or destination port information, or target service URL information, or protocol number information.

16. The method according to claim 11, wherein the access verification information is further determined based on at least one of: a user identity ID, or a service ID, or source port information, or destination port information, or target service URL information, or protocol number information.

17. An electronic device, comprising:
one or more processors;
a memory having stored thereon one or more programs which, when executed by the one or more processors, causes the one or more processors to implement:
the service access control method according to any one of claims 1 to 5; or,
the service access control method according to any one of claims 6 to 10; or,
the service access control method according to any one of claims 11 to 16.

18. A computer-readable storage medium having stored thereon a computer program which, when executed by a processor, implements:
the service access control method according to any one of claims 1 to 5; or,
the service access control method according to any one of claims 6 to 10; or,
the service access control method according to any one of claims 11 to 16.
